# EUROPÄISCHE PATENTSCHRIFT

(11) **EP 3 743 479 B1**
(45) Veröffentlichungstag und Bekanntmachung des Hinweises auf die Patenterteilung: **26.10.2022**
(21) Anmeldenummer: 19701612.4
(22) Anmeldetag: 22.01.2019
(51) Int. Cl.: C09G 3/00, C08L 91/00, C08L 91/06

(54) **GLEITMITTEL FÜR WINTERSPORTGERÄTE AUF BASIS INDIGOIDER MOLEKÜLE**
LUBRICANT FOR WINTER SPORTS EQUIPMENT BASED ON INDIGOID MOLECULES
LUBRIFIANT POUR ÉQUIPEMENT DE SPORT D'HIVER À BASE DE MOLÉCULES INDIGOIDES

(30) Priorität: 23.01.2018 CH 852018
(43) Veröffentlichungstag der Anmeldung: 02.12.2020
(73) Patentinhaber: Bützer, Marcel, 9450 Altstätten SG (CH); Bützer, Peter, 9450 Altstätten SG (CH)
(72) Erfinder: Bützer, Marcel, 9450 Altstätten SG (CH); Bützer, Peter, 9450 Altstätten SG (CH)
(74) Vertreter: Bogensberger, Burkhard
(86) Internationale Anmeldenummer: PCT/EP2019/051471
(87) Internationale Veröffentlichungsnummer: WO 2019/145282

(56) Entgegenhaltungen:
- WO-A1-2004/000946
- CA-A1- 2 498 447
- DD-A3- 231 219
- FR-A1- 2 925 324

## Beschreibung

Die vorliegende Erfindung betrifft die Verwendung indigoider Moleküle als Gleitmittelkomponenten in Gleitmitteln für Wintersportgeräte wie Skis, Schlitten, Snowboards, und dergleichen.

### STAND DER TECHNIK

Früher wurde jene Holzoberfläche von Skiern, die als Gleitfläche mit dem Schnee in Berührung kam, zum Zwecke der Reibungsminderung mit Fetten, Teer, Harzen, Wachsen oder Lacken bedeckt. Schliesslich bedeckte man die Gleitfläche der Skier mit einem durchgehenden Oberflächenbelag in Form einer reibungsmindernden Kunststoffschicht. Um die Reibung gegenüber Schnee, Wasser und/oder Eis weiter zu verringern, wurden die ursprünglichen natürlichen Wachse durch synthetische Paraffine substituiert, welche den Umwelt- und Schneebedingungen spezifisch angepasst waren. Zusätzlich wurde der Oberflächenbelag strukturiert. Später wurden dann Graphitpulver, Silikone, Molybdändisulfid, hydrophobisierte Partikel, verschiedene Metallpulver und Gallium, "Weichmacher"-Zusätze wie Ethylenvinylacetat (EVA) und verschiedene Polymere als Gleitmittel auf den Oberflächenbelag aufgetragen. Grosse Fortschritte zur Verminderung der Reibung konnten mit Tensiden und fluorierten Kohlenwasserstoffen erreicht werden. Die modernsten und wirksamsten Gleitmittelkomponenten sind die per- und polyfluorierten Kohlenstoff-Verbindungen. Diese sind entweder noch kaum untersucht oder werden ökologisch und arbeitshygienisch als bedenklich eingestuft.

Der Oberflächenbelag von z.B. Skiern, Snowboards oder Skibobs ist eine mit der - meist hölzernen - Lauffläche des Wintersportgeräts fest verbundene Schicht aus reibungsarmem Kunststoff, die mit ihrer freien Oberfläche, der Gleitfläche, entweder direkt oder über eine zusätzlich aufgebrachte Gleitmittelschicht mit Eis, Schnee und/oder Wasser in Berührung kommt. Dieser Oberflächenbelag, nachfolgend der Einfachheit halber als "Belag" bezeichnet, kann zusätzlich mit einer den Witterungsbedingungen angepassten Strukturierung, beispielsweise einem speziellen Schliff, und spezifischen Gleitmitteln, z.B. Wachsen, gegebenenfalls mit Zusätzen, versehen werden.

Die wichtigsten Anforderungen an die Gleitfläche gegenüber Eis, Schnee oder Wasser sind: minimale Reibung, hydrophob (wasserabweisend), hart, elastisch, abriebfest, schmutzabweisend, oxidationsunempfindlich, lichtstabil, chemisch wenig reaktiv, arbeitshygienisch unkritisch und wenig umweltbelastend.

Für das Erzielen guter Gleiteigenschaften des Wintersportgerätes gegenüber Eis, Schnee und/oder Wasser ist zu berücksichtigen, dass der, vornehmlich durch das Eigengewicht des Wintersportlers verursachte, auf die Gleitfläche des Wintersportgerätes einwirkende, Druck im Idealfall zu einer minimalen, jedoch hinreichenden Schmelzwasserbildung zwischen Gleitfläche und Schnee oder Eis führt. Es ist vor allem die Ausbildung eines solchen Wasserfilms, welche die Gleiteigenschaften des Wintersportgerätes verbessert und bremsende Saugkräfte vermindert. Das Bemühen der Präparatoren von Wintersportgeräten gilt daher vor allem der Wechselwirkung zwischen Gleitfläche und Wasserfilm. So wird schon durch zumindest geringfügige elektrische Leitfähigkeit im Kontaktbereich Gleitfläche-Wasser/Schnee/Eis/ die durch die Gleitreibung entstehende, elektrostatische Aufladung verhindert oder zumindest wesentlich vermindert und so das Anhaften von Schmutzpartikeln und auch die Ausbildung unerwünscht dicker Schmelzwasserfilme unterdrückt.

Ziel ist immer die Erreichung einer minimalen Reibung zwischen der Gleitfläche des Wintersportgeräts und der Eis-, Schnee- oder Wasseroberfläche, um bestmögliche Laufeigenschaften und maximale Gleitgeschwindigkeiten der Wintersportgeräte zu erzielen. Eine um 10% verminderte Reibung führt bei wettkampfmässigem Einsatz häufig zu einer um 3% bis 4% verbesserten Performance bzw. Erhöhung der Durchschnittsgeschwindigkeit unter den gegebenen äusseren Bedingungen.

Unter "Gleitfläche" soll im Nachfolgenden jene unbehandelte Oberfläche des Wintersportgerätes verstanden werden, die im Einsatzfall mit Schnee, Wasser und/oder Eis in Berührung kommt und darauf gleitet, sofern sich aus dem Sinnzusammenhang nicht etwas anderes ergibt. Bei Skiern und skiartigen Wintersportgeräten, wie z.B. Snowboards und Skibobs, ist dies die unbehandelte, freie Oberfläche des Kunststoffbelages (im Nacholgenden auch als "Belag" abgekürzt) auf der Lauffläche des Skis, Skibobs oder Snowboards. Bei Wintersportgeräten mit Kufen ist dies die unbehandelte Oberfläche der Kufen.

"Unbehandelt" bedeutet in diesem Zusammenhang "nicht mit einem Gleitmittel präpariert".

Gleitmittel können grundsätzlich auf den Belag aufgebracht oder in den Belag eingebracht, oder sowohl aufgebracht als auch eingebracht werden. Wird ein Gleitmittel in den Belag eingebracht, kann dies bereits im Zuge der Herstellung des Wintersportgerätes, typischerweise eines Skis, Snowboards oder Skibobs, erfolgen. Gleitmittel in Form von Festkörpern, z.B. Wachsblöcken oder Wachsstiften, oder in Pulverform, können aufgerieben oder als Schmelze aufgetragen werden. Zahlreiche Gleitmittelkomponenten können auch in einer Flüssigkeit gelöst, dispergiert, emulgiert, als Paste oder in Form von Mischungen, insbesondere in Wachsen, kalt oder heiss aufgetragen und in die Strukturen der Oberfläche des Belags eingearbeitet werden.

Durch die massenhafte Verwendung von traditionellen Skiwachsen und anderen modernen Gleitmitteln im Leistungs- und Freizeitsport und dem damit verbundenen Eintrag derselben in die Umwelt, werden ökologische, aber auch arbeitshygienische Kriterien immer bedeutungsvoller. Das betrifft nicht nur die Herstellung und die Anwendung der Gleitmittel, sondern auch deren Abfälle, den Abrieb, die Rückstände und die Gleitmittel-Abbauprodukte.

Heute üblich ist die Verwendung von Gleitmitteln sowohl in der Form von Einzelkomponenten, als auch in der Form von Mischungen zweier oder mehrerer Gleitmittelkomponenten und/oder Gleitmittel-Zusätze, darunter eine Vielzahl von organischen Materialien. Häufig verwendete Gleitmittelkomponenten umfassen typischerweise Harze, Teerprodukte, Paraffine, Fettsäurederivate, Natriumdodecylsulfat (SDS), teil- und vollhalogenierte Kohlenstoffverbindungen sowie Polysiloxanverbindungen. Es kommen auch anorganische Materialien, wie zum Beispiel Russ, Graphit, Graphen, Fulleren, Nanotubes, Molybdändisulfid, Gallium, Silikate, Bornitrid, Silber, Korund und fluorierte und silanisierte Partikel zum Einsatz.

Unter dem Begriff "Gleitmittel" wird im Nachfolgenden eine Gleitmittelzusammensetzung verstanden, die entweder zu 100 Prozent aus einer einzigen Gleitmittelkomponente oder aus einer Mischung von zwei oder mehreren Gleitmittelkomponenten, gegebenenfalls zusammen mit weiteren Zusätzen, besteht.

Fast alle halogenhaltigen, organischen Substanzen, insbesondere die fluorierten Verbindungen, stehen seit langem in der Kritik. Bei Nanomaterialien, Molybdändisulfid und Gallium sind die toxikologischen und ökologischen Auswirkungen noch nicht ausreichend abschätzbar. Selbst kovalent an die Belagsoberfläche gebundene, fluorhaltige Verbindungen zeigen in der Praxis einen Abrieb, der die Umwelt in Form persistenter, d.h. nur schlecht oder gar nicht abbaubarer Verbindungen belastet.

Aus der US 4,673,597 sind Gallium und Molybdändisulfid bekannt. Gallium ist nachteilig, weil es als sehr seltenes Metall in seinen toxikologischen und ökologischen Auswirkungen nicht hinreichend beurteilt werden kann. Molybdändisulfid bildet gleitfähige, hydrophobe Schichten aus. Nachteilig ist dabei, dass Molybdändisulfid erfahrungsgemäss nur bei feuchtem Schnee die Reibung auf hohem Niveau zu reduzieren vermag. Molybdän kommt im Boden, Wasser, in Pflanzen, Tieren und beim Menschen nur in ppm-Konzentrationen vor. Die möglichen negativen Folgen eines lokal grösseren Eintrags lassen sich in ihren Auswirkungen heute noch nicht vollständig abschätzen.

Graphit und Russ konnten sich als alleinige Gleitmittelkomponenten zum Aufbringen auf den Belag von Wintersportgeräten nicht durchsetzen, als Zusatz sind sie jedoch etabliert, vor allem als integrierter Bestandteil von Skibelägen. Graphit und Russ haben zwar gute aber keine herausragenden Eigenschaften. Sie enthalten nur geringe Mengen an Graphen und zeigen daher schlechtere tribologische Eigenschaften als reines, einheitlich strukturiertes Graphen, oder Fullerene und Nanotubes.

Graphen mit seinen planaren Strukturen weist experimentell nachgewiesene, gute tribologische Eigenschaften auf. Nachteilig ist, dass Graphen in der Herstellung sehr teuer und arbeitshygienisch als Nanomaterial noch nicht hinreichend beurteilbar ist (siehe DE 102011116342).

Aus dem europäischen Patent EP 3254768 sind fluorierte Verbindungen mit einer chemisch reaktiven, strahlungsaktivierbaren funktionellen Gruppe bekannt, die eine kovalente Bindung an den Belag ausbilden kann. Fluorierte Verbindungen vermindern dank ihrer hydrophoben Eigenschaften die Reibung entscheidend. Nachteilig dabei ist jedoch, dass diese fluorierten Verbindungen trotz chemischer Verbindung mit dem Belag durch den unvermeidlichen Abrieb trotzdem in die Umwelt gelangen. Obendrein ist die Anwendung von chemisch reaktiven, fluorierten organischen Verbindungen arbeitshygienisch bedenklich.

Aufgabe der vorliegenden Erfindung ist es daher, Gleitmittelkomponenten und darauf basierende Gleitmittel bereitzustellen, welche die erwähnten Nachteile nicht aufweisen. Gelöst wird diese Aufgabe durch die in den unabhängigen Ansprüchen definierte Verwendung indigoider Moleküle als Gleitmittelkomponenten in einem Gleitmittel, welche die Reibung der Gleitflächen von Wintersportgeräten gegenüber Wasser, Schnee und/oder Eis auf ein Minimum herabzusetzen vermögen und gleichzeitig ökologisch und arbeitshygienisch weitgehend unbedenklich sind.

### BESCHREIBUNG

In einer ersten Ausführungsform bezieht sich die Erfindung auf ein Gleitmittel welches sich dadurch auszeichnet, dass es zumindest eine Komponente aus der Gruppe der indigoiden Moleküle resp. Verbindungen, einschliesslich deren halogenierter Derivate, als Gleitmittelkomponente enthält.

Die erfindungsgemäss geeigneten indigoiden Moleküle können durch die folgenden chemischen Formeln dargestellt werden:

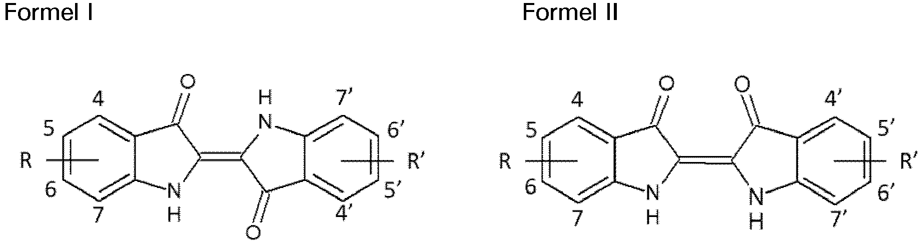

Formel I bezieht sich auf das E-Isomer und Formel II auf das Z-Isomer von Indigo (E- und Z-Isomere haben dieselbe CAS-Nr.), wobei R = 4,5,6,7 und R' =4',5',6',7'; R und R' können je 4 H, aber auch monosubstituiert mit 3 H und je 1 F, 1 Cl oder 1 Br sein, oder disubstituiert mit 2 H und je 2 F, 2 Cl oder 2 Br.

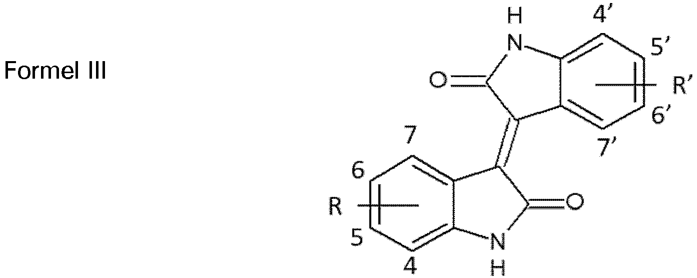

Formel III bezieht sich auf das E-Isomer von Isoindigo. Auch bei Isoindigo werden die E- und Z-Isomere unter derselben CAS-Nr.angeführt; wobei R = 4,5,6,7 und R' = 4',5',6',7'; R und R' können je 4 H, aber auch monosubstituiert mit 3 H und je 1 F, 1 Cl oder 1 Br sein, oder disubstituiert mit 2 H und je 2 F, 2 Cl oder 2 Br. Diese Moleküle können in unterschiedlichen Kristallstrukturen vorliegen (Polytypie, Polytypoiden).

Die erfindungsgemäss bevorzugten indigoiden Moleküle umfassen insbesondere die Substanzen Indigo (CAS-Nr. 482-89-3, CAS-Nr. 68651-46-7) und Isoindigo (CAS-Nr. 476-34-6). Verwendbar sind aber auch die nachfolgenden, halogonierten Derivate der indigoiden Verbindungen, welche R,R'-substituiert sind:
6,6'-Dibromindigo (CAS-Nr. 19201-53-7, CAS-Nr. 1277170-99-6); 5,5'-Dibromindigo (CAS-Nr. 84-40-2); 5,5'-Dichlorindigo (CAS-Nr. 6872-04-4); 6,6'-Dichlorindigo (CAS-Nr. 97724-36-2); 6,6'-Dibromisoindigo (CAS-Nr. 1147124-21-7);
4,4'-Dichlor-5,5'-dibromindigo (CAS-Nr. 29245-44-1); 5,5',7,7'-Tetrabromindigo (CAS-Nr. 2475-31-2).

Fluorierte Indigoderivate sind grundsätzlich möglich, aber ökologisch nicht sinnvoll.

"CAS" ist die Abkürzung für Chemical Abstracts Service Number. Die CAS-Angaben dienen in diesem Zusammenhang zur eindeutigen Identifikation einiger hierin beanspruchter, insbesondere bevorzugter, indigoider Moleküle.

Für viele Anwendungsfälle können auch solche erfindungsgemässen indigoiden Moleküle eingesetzt werden, die an den Positionen 4,4' und/oder 5,5' und/oder 6,6' und/oder 7,7' einen oder mehrere Wasserstoff-, Fluor-, Chlor- oder Brom-Substituenten aufweisen. Auch diese Verbindungen zeigen unter typischen winterlichen Verhältnissen meist gute bis sehr gute tribologische Eigenschaften und eignen sich daher als Gleitmittelkomponenten für die Beläge von Wintersportgeräten.

Typischerweise beträgt in einem erfindungsgemässen Gleitmittel der gewichtsmässige Anteil der Gleitmittelkomponenten auf Basis der im Handel erhältlichen indigoiden Moleküle, einschliesslich allfälliger halogenierter Derivate, 1 bis 100 Gewichtsprozent, vorzugsweise 5 bis 100 Gewichtsprozent und besonders bevorzugt wenigstens 10, 20, 30, 40, 50, 60, 70, 80 oder 90 Gewichtsprozent, des Gleitmittels. Zu diesem Zweck werden die indigoiden Moleküle üblicherweise in Pulverform und bevorzugt in ihrer kommerziell verfügbaren Reinform mit einem Reinheitsgrad von 90% bis 100% eingesetzt.

Durch die Verwendung einer Mischung von zwei oder mehreren verschiedenen Gleitmittelkomponenten auf der Basis der erfindungsgemässen indigoiden Moleküle, einschliesslich deren halogenierter Derivate, können die Eigenschaften des Gleitmittels gegebenfalls weiter verfeinert und gezielt auf aktuelle äussere Schnee-, Eis- und Temperatur-Bedingungen abgestimmt werden.

Üblicherweise wird das Gleitmittel in fester, flüssiger oder gasförmiger Form auf die Gleitfläche eines Wintersportgerätes, insbesondere eines Alpinskis, eines Langlaufskis, eines Sprungskis, eines Snowboards, Skibobs, einer Rodel, eines Schlittens, Skeletons oder Bobs aufgebracht. Eine spezielle Anwendung sieht vor, dass die indigoiden Moleküle, einschliesslich deren halogenierter Derivate, durch Sublimation bzw. Verdampfung temporär in die Gasphase überführt und anschliessend auf die Gleitfläche abgeschieden werden. Dazu wird ein Verfahren angewandt, welches im Wesentlichen dem bekannten Sublimationsdruck-Verfahren zum Aufbringen von Bildern, Aufschriften oder Werbebotschaften auf Oberflächen entspricht. Dabei wird eine mit dem gewünschten Gleitmittel beladene Trägerfolie mit der Gleitfläche des Wintersportgeräts in Kontakt gebracht und in einer Druck/Temperaturkammer unter erhöhtem Druck und erhöhter Temperatur das Gleitmittel von der Trägerfolie abgelöst und auf die Gleitfläche "aufsublimiert". Dieses Verfahren eignet sich beispielsweise für das Präparieren der Kufen von Rodeln, Schlitten, Skeletons oder Bobs.

Für andere Anwendungszwecke kann das Gleitmittel als Bestandteil des Belags eines Skis oder skiartigen Wintersportgerätes in diesen Belag eingearbeitet und gegebenenfalls noch zusätzlich oberflächlich auf den Belag aufgetragen werden.

Die überraschenden, hervorragenden Gleiteigenschaften der erfindungsgemässen indigoiden Moleküle dürften vermutlich darauf zurück zu führen sein, dass sie zum Einen eine sehr geringe Wasserlöslichkeit besitzen und zum Anderen eine planare, weitestgehend in einer Ebene liegende Struktur aufweisen. Die planare Struktur ermöglicht es den Molekülen, Schichten ausbilden, die sich supramolekular organisieren. Der Aufbau dieser Struktur erfolgt durch Wasserstoffbrückenbindungen zwischen funktionellen Gruppen vom Typ C = O und N-H) und zusätzliche starke pi-pi-Wechselwirkungen zwischen übereinander liegenden pi-Elektronensystemen. So ist z.B. jedes Indigo-Molekül über Wasserstoffbrücken mit vier weiteren Molekülen verbunden. Wobei die intramolekulare und/oder intermolekulare Bindung über die polaren Gruppen dergestalt erfolgt, dass die Molekülkomplexe insgesamt gegenüber Eis, Schnee und Wasser stets hydrophob bleiben.

Die aufgetragene Schicht der erfindungsgemässen Gleitmittel auf den Belag ist vorzugsweise so dünn, dass allfällig vorhandene Belagsstrukturen erhalten bleiben. Die spezifischen elektrostatischen Eigenschaften der indigoiden Moleküle vermindern nämlich die Aufnahme von Verunreinigungen als Folge der Reibung mit verschmutztem Eis, Schnee oder Wasser. Dadurch werden nicht nur die Gleiteigenschaften verbessert sondern gleichzeitig auch der Abrieb verringert und die Verweilzeit der Gleitmittel auf der präparierten Gleitfläche des Wintersportgerätes verlängert. Dass die Moleküle intermolekular planar bleiben, kann mittels Kristallstrukturanalyse nachgewiesen werden.

Durch die kompakten, dichten Schichtstrukturen der indigoiden Moleküle weist das erfindungsgemässe Gleitmittel zudem nur eine geringe Temperaturabhängigkeit auf. Das hat sich in praktischen Versuchen auf verschiedenen Schnee- und Eisarten in Bezug auf die Gleiteigenschaften und den Abrieb ebenfalls als besonders vorteilhaft herausgestellt.

Der Nachweis erfindungsgemässer indigoider Moleküle als Gleitmittelkomponente in oder auf einem Belag eines Wintersportgerätes lässt sich sowohl für Einzelkomponenten als auch für Gemische von Gleitmittelkomponenten schon anhand geringer Probenmengen, beispielsweise mittels Raman-Spektrometrie oder FTIR-Spektrometrie (Fourier-Transform-Infrarot-Spektrometrie), meist rasch, einfach und sicher bewerkstelligen.

Die Verwendung der indigoiden Moleküle als Gleitmittelkomponenten zeigt zudem im Vergleich zum bekannten Stand der Technik eindeutige Vorteile in ökologischen sowie arbeitshygienischen Belangen. Indigo kann z.B. aus der Pflanze Färberwaid (*Isatis tinctoria*) gewonnen werden und ist daher für einen naturnahen Einsatz mit dem Anspruch auf Nachhaltigkeit besonders geeignet. Die gute Hautverträglichkeit von Indigo ist durch die jahrzehntelange, weltweite Verwendung als Farbstoff in Textilien bestätigt. Für die Bewertung der Ökologie und der Arbeitshygiene wurden Vergleiche mit einer Vielzahl von ökologischen und toxikologischen Parametern durchgeführt.

Der im Vergleich zu vielen herkömmlichen Gleitmitteln verbesserte, d.h. geringere, Abrieb der erfindungsgemässen Gleitmittel auf Basis der indigoiden Moleküle könnte u.a. auch damit zusammen hängen, dass sich aufgrund der oben beschriebenen Wasserstoffbrückenbindungen und starken pi-pi-Wechselwirkungen harte aber elastische Schichten ausbilden. Die indigoiden Moleküle sind somit nicht ganz starr miteinander verbunden, sondern haben eine gewisse relative Beweglichkeit. Dies könnte eventuell eine spontane Reparatur einer verletzten Gleitmittelschicht, zumindest in gewissem Umfang, ermöglichen.

Die Vorteile der erfindungsgemässen Gleitmittelkomponenten und Gleitmittel konnten in praktischen Versuchen bestätigt werden. Es wurde eine bevorzugte Ausführungsform getestet bei der eine dünne, reine Schicht von Indigo als alleinigem Gleitmittel direkt auf den Belag von Langlauf-Skating-Skis aufgerieben wurde. Die so präparierte Gleitfläche zeigte bei unterschiedlichem Schnee sehr gute Gleiteigenschaften und über 50 Kilometer einen nur geringen Abrieb des Gleitmittels. Dieser geringe Abrieb verbessert die Ökobilanz des sonst schon nachhaltigen Gleitmittels zusätzlich. Die praktischen Erfahrungen konnten die theoretisch erwarteten Eigenschaften bestätigen.

Ein weiterer Vorteil der erfindungsgemässen Gleitmittel besteht darin, dass sie mit den heute schon üblichen und beschrieben Verfahren für eine fachgerechte Applikation genutzt werden können. Ein erfindungsgemässes Gleitmittel kann auf Grund der geringen chemischen Reaktivität sowohl als Bestandteil des Belags, als reine Schicht auf dem Belag (Trocken- oder Flüssigauftrag) oder als Additiv für Heiss- und Flüssigwachse zum Präparieren der Gleitflächen von Wintersportgeräten eingesetzt werden. Da Indigo bei ca. 300°C sublimiert, wäre prinzipiell die Möglichkeit der Applikation über die Gasphase mittels Sublimationsdruckverfahren ebenfalls verfügbar, speziell für Wintersportgeräte mit Kufen. Diese Art der Aufbringung stellt allerdings eine Besonderheit dar und lohnt sich nur für solche Fälle, wo ein hochreines Auftragen einen Zusatznutzen bringt.

### FIGURENBESCHREIBUNG

- Fig. 1:: zeigt ein Raman-Spektrum einer Probe eines weissen UHMWPE-Belages, aufgenommen mit einem mobilen Raman-Spektrometer vom Typ Mira-M-1 (Metrohm); x-Achse = Wellenzahl [cm⁻¹], y-Achse = Intensität [willkürliche Einheiten]
- Fig. 2:: zeigt ein Raman-Spektrum einer Probe von E-Indigo auf einem weissen UHMWPE-Belag (Metrohm, Mira-M-1); x-Achse = Wellenzahl [cm⁻¹], y-Achse = Intensität [willkürliche Einheiten]
- Fig. 3:: zeigt ein Beispiel einer Messung der Benetzungsdynamik eines Skibelags. x-Achse = Kraft [N], y-Achse = Zeit [s].

Nachfolgend soll das Verständnis der Erfindung anhand von Beispielen mit reinem Indigo als Gleitmittelkomponente oder alleinigem Gleitmittel weiter vertieft werden.

### BEISPIEL 1: direkter Auftrag eines Einzelkomponenten-Gleitmittels auf einen Ski

Reiner Indigo (Merck, Indigo synthetic, Dye content 95%, CAS Number 482-89-3) wird als Pulver auf die ungewachste oder gewachste Belagsoberfläche eines Skis gestreut, gut verteilt und mit einem Korkblock solange in Laufrichtung kräftig eingerieben, bis die Oberfläche ganz mit einer dünnen Schicht bedeckt ist. Danach wird der Indigo mit einer Kupferbürste so verteilt, dass er auch die Vertiefungen der Belags-Strukturen ganz bedeckt. Dieser Vorgang kann mehrmals wiederholt werden. Am Schluss wird nochmals ganz wenig Indigo eingerieben und dann die Oberfläche mit einer Polierbürste, z.B. aus Rosshaar, poliert.

Diese Art des Auftragens eignet sich auch für die anderen der hierin offenbarten erfindungsgemässen indigoiden Moleküle.

### BEISPIEL 2: Auftrag einer Gleitmittelkomponente als Mischung mit Wachs

120 g eines harten, flurofreien HydroCarbon-Wachses (z.B. Toko, NF blau) werden bei 120°C geschmolzen. In die Schmelze wird dieselbe Masse Indigo (hier Merck, Indigo synthetic, Farbstoffgehalt 95%, CAS Number 482-89-3) gut eingerührt, bis die Mischung einigermassen homogen ist. Nach dem Abkühlen werden kleine Stücke der erkalteten Mischung auf der Belagsoberfläche eines Skis gut verteilt und mit dem Bügeleisen bei 120-150°C auf bekannte Art und Weise aufgeschmolzen. Die anschliessenden Arbeitsschritte des Skipräparierens erfolgen auf dieselbe Art, wie sie bei der Verwendung von Heisswachsen üblich sind.

Diese Art des Auftragens eignet sich auch für die anderen der hierin offenbarten erfindungsgemässen indigoiden Moleküle.

### BEISPIEL 3: Auftragen als Dispersion in Ethanol

Reiner Indigo wie in Beispiel 1 wird als 4% Dispersion in Ethanol (40g Indigo/1000g EtOH) mit einem Schwammaufträger auf den Belag der Gleitfläche eines Langlaufskis aufgetragen. Nach dem Verdunsten des Ethanols wird der Rückstand mittels eines Filzes und einer Bürste in die Belagsoberfläche eingerieben.

Diese Art des Auftragens eignet sich auch für die anderen der hierin offenbarten erfindungsgemässen indigoiden Moleküle.

### BEISPIEL 4: Gleittest (Ski alpin)

Bedingungen:
- Umgewandelter Schnee und Neuschnee (Schneefall);
- Temperatur: -2°C;
- Zeitmessung für die Teststrecke über Lichtschranken
- Je 3 kalibrierte Renn-Skis; erfahrene Testfahrer
- Fluor 1/Fluor 2: beste für die entsprechenden Verhältnisse verfügbare, professionell aufgetragene, perfluorierte Paraffine.
- E-Indigo aufgetragen gemäss Beispiel 1
- Geschwindigkeit im Ziel ca.84 km/h

**Tabelle 1: Vergleich von Gleitmitteln auf Basis perfluorierter Wachse bzw. Indigo**

| Testlauf | Gleitmittel | | |
|---|---|---|---|
| | Fluor 1: Toko JetStream Powder Rot | Fluor 2: Toko HeIX liquid | E-Indigo |
| Zeiten [s] | 15.71 | 15.96 | 15.72 |

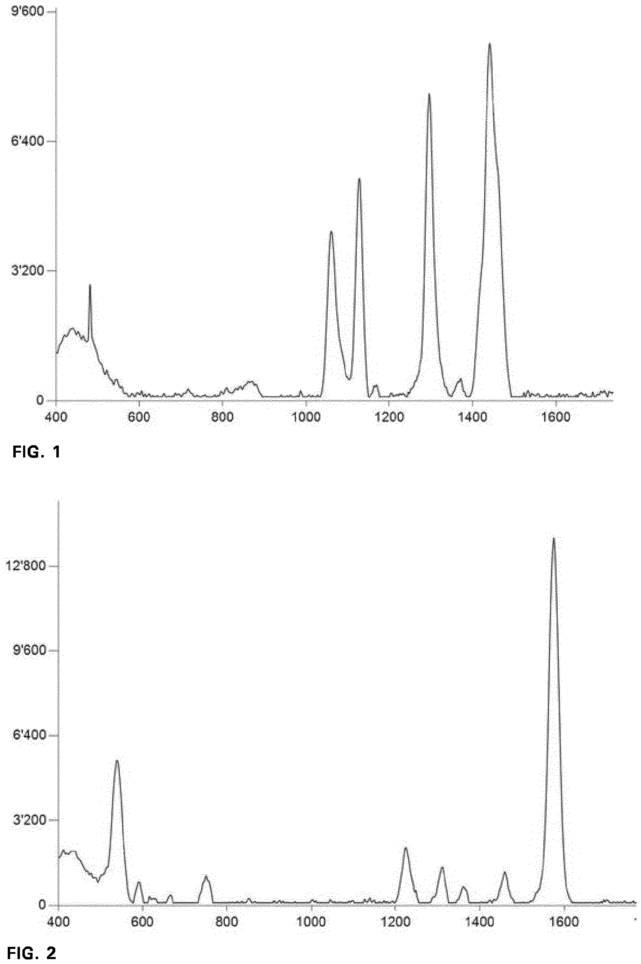

Ähnliche Ergebnisse lassen sich auch mit den anderen der hierin offenbarten erfindungsgemässen indigoiden Moleküle erzielen.
- BEISPIEL 5:: Nachweis von indigoiden Molekülen auf einem gesinterten HMWPE-Belag (Fig. 1 und Fig. 2)

Das Raman-Spektrum mit Indigo auf weissem UHMWPE-Belag (Fig. 2) zeigt den für Indigo typischen Peak bei 1581 Wellenzahlen deutlich. In Fig. 1 (reiner UHMWPE-Belag) fehlt dieser Peak. Der Nachweis einer Beschichtung mit Indigo ist rasch und überzeugend.

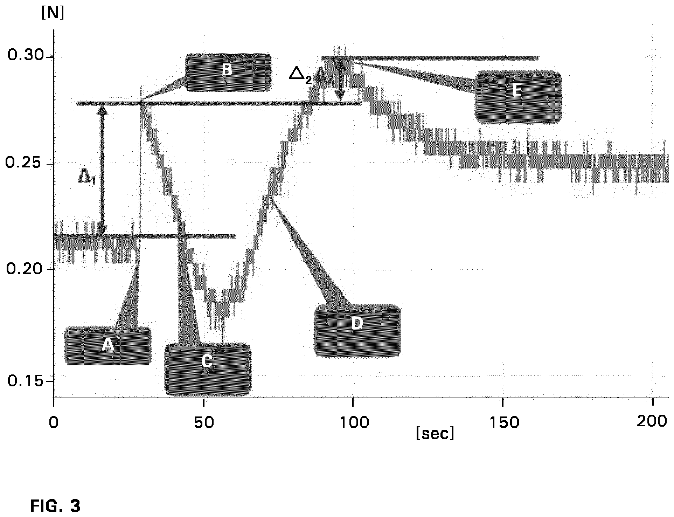

### BEISPIEL 6: Benetzungsdynamik am Beispiel eines Langlaufskis (Fig. 3)

Bei Langlaufskis ändert sich die Gleitgeschwindigkeit laufend, entsprechend dem zyklischen Kraftaufwand, der für die Beschleunigung durch den Läufer aufgebracht wird.

Weil die Langlaufskier bei jedem Schritt angehoben werden, bildet sich die dünne Wasser-Gleitschicht zwischen Ski und Schnee jedes Mal neu. Eine dynamische Bildung einer Gleitschicht mit geringer Reibung ist daher von grosser Wichtigkeit. Diese Dynamik mit dem Wasserfilm wird in einem einfachen Experiment nachgebildet. Dabei werden die Bindungskräfte zwischen dem Wasserfilm und einer reinen, sowie einer graphithaltigen und einer mit E-Indigo beschichteten UHMWPE- Oberfläche verglichen.

In Fig. 3 erfolgt bei A der Kontakt mit Wasser, bei B ist die Gleitfläche des Skis voll benetzt, bei C wird der Ski aufwärts gestossen, bei D wird der Ski abwärts gezogen und bei E erfolgt die erste Trennung des Skis vom Wasserfilm. In der nachfolgenden Tabelle werden die dabei gemessenen Bindungskräfte in Newton (N) dargestellt.

**Tabelle**

| | ohne E-Indigo | mit E-Indigo |
|---|---|---|
| UHMWPE schwarz, Δ1 | 0.132 N | 0.063 N |
| UHMWPE schwarz, Δ2 | 0.056 N | 0.019 N |
| UHMWPE weiss, Δ1 | 0.037 N | 0.031 N |
| UHMWPE weiss, Δ2 | 0.051 N | 0.044 N |

Das Experiment macht deutlich, dass E-Indigo selbst als Einzelkomponenten-Gleitmittel sowohl die Bindung mit dem Wasser beim Kontakt verringert (Δ1), als auch die Kraft vermindert (Δ2), um die Oberfläche vom Wasser wieder zu trennen. Ähnliche Ergebnisse lassen sich auch mit den anderen der hierin offenbarten erfindungsgemässen indigoiden Moleküle erzielen.

## Patentansprüche

1. Verfahren zum Vermindern der Reibung der Gleitflächen von Wintersportgeräten gegenüber Schnee, Wasser und/oder Eis, **dadurch gekennzeichnet, dass** ein Gleitmittel, welches mindestens eine Gleitmittelkomponente auf der Basis eines indigoiden Moleküls enthält, in fester, flüssiger oder gasförmiger Form auf einen Oberflächenbelag der Gleitfläche aufgebracht oder in einen solchen Oberflächenbelag eingebracht oder unmittelbar auf eine belagsfreie Gleitfläche eines Wintersportgerätes aufgetragen wird.

2. Verfahren nach Anspruch 1, **dadurch gekennzeichnet, dass** das indigoide Molekül mindestens ein halogeniertes Derivat umfasst.

3. Verfahren nach Anspruch 1 oder 2, **dadurch gekennzeichnet, dass** das indigoide Molekül Indigo in Form eines E-Isomers mit folgender Strukturformel I: 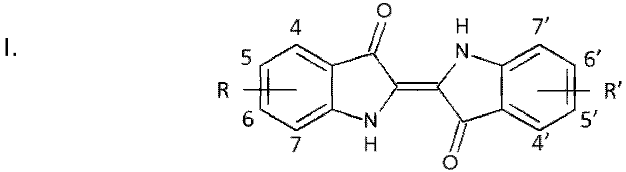 oder eines Z-Isomers mit folgender Strukturformel II 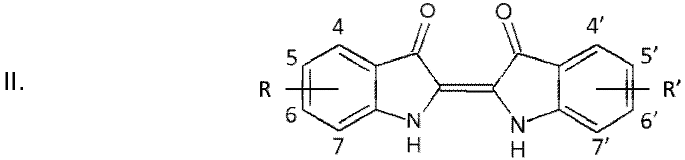 ist, wobei R=4,5,6,7 und R' = 4',5',6',7'; wobei R und R' unabhängig von einander jeweils 4 H oder monosubstituiert mit jeweils 3 H und je 1 F, 1 Cl oder 1 Br, oder disubstituiert mit jeweils 2 H und je 2 F, 2 Cl oder 2 Br sein können.

4. Verfahren nach Anspruch 1, **dadurch gekennzeichnet, dass** das indigoide Molekül Isoindigo mit folgender Strukturformel III ist: 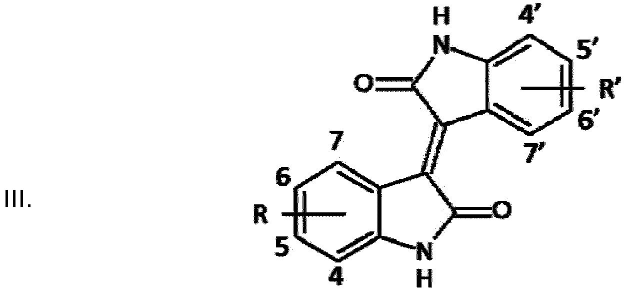 wobei R = 4,5,6,7 und R' = 4',5',6',7'; wobei R und R' unabhängig von einander jeweils 4 H, oder monosubstituiert mit jeweils 3 H und je 1 F, 1 Cl oder 1 Br, oder disubstituiert mit jeweils 2 H und je 2 F, 2 Cl oder 2 Br sein können.

5. Verfahren nach einem der Ansprüche 1 bis 4, **dadurch gekennzeichnet, dass** das Gleitmittel im Zuge der Herstellung eines Skis oder skiartigen Wintersportgerätes in den Oberflächenbelag der Gleitfläche dieses Wintersportgerätes als Bestandteil des Belages eingebracht wird.

6. Verfahren nach einem der Ansprüche 1 bis 5, **dadurch gekennzeichnet, dass** das Gleitmittel als Feststoff, Pulver, Paste, Schmelze, Lösung, Dispersion oder Emulsion auf die Oberfläche eines Belags der Gleitfläche des Wintersportgerätes aufgebracht wird.

7. Verfahren nach einem der Ansprüche 1 bis 6, **dadurch gekennzeichnet, dass** das Gleitmittel ein Gemisch aus mindestens zwei verschiedenen Gleitmittelkomponenten auf der Basis indigoider Moleküle enthält.

8. Verwendung indigoider Moleküle als Gleitmittelkomponenten eines Gleitmittels zum Präparieren der Gleitflächen eines Wintersportgerätes, insbesondere eines Alpinskis, eines Langlaufskis, Sprungskis, eines Snowboards, Skibobs, einer Rodel, eines Schlittens, Skeletons oder Bobs, zum Vermindern der Reibung der Gleitflächen des Wintersportgerätes gegenüber Schnee, Wasser und/oder Eis.

9. Verwendung nach Anspruch 8, wobei mindestens ein halogeniertes Derivat als indigoides Molekül verwendet wird.

10. Verwendung nach Anspruch 8, wobei Indigo als E-Isomer mit folgender Strukturformel I: 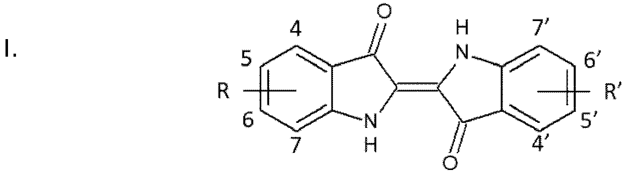 oder als Z-Isomer mit folgender Strukturformel II 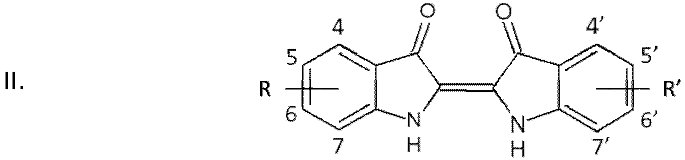 als indigoides Molekül verwendet wird, wobei R = 4,5,6,7 und R' =4',5',6',7'; wobei R und R' unabhängig von einander jeweils 4 H oder monosubstituiert mit jeweils 3 H und je 1 F, 1 Cl oder 1 Br, oder disubstituiert mit jeweils 2 H und je 2 F, 2 Cl oder 2 Br sein können.

11. Verwendung nach Anspruch 8, wobei 6,6'-Dibromindigo als indigoides Molekül verwendet wird.

12. Verwendung nach Anspruch 8, wobei Isoindigo mit folgender Strukturformel III als indigoides Molekül verwendet wird: 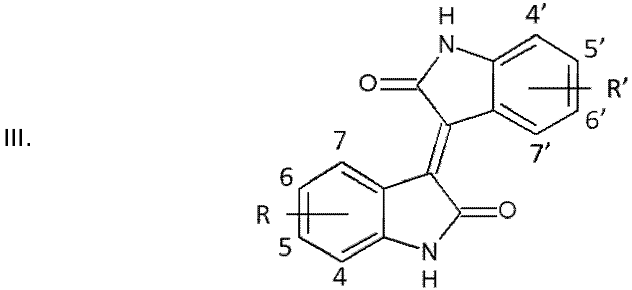 wobei R=4,5,6,7 und R' =4',5',6',7'; wobei R und R' unabhängig von einander jeweils 4 H, oder monosubstituiert mit jeweils 3 H und je 1 F, 1 Cl oder 1 Br, oder disubstituiert mit jeweils 2 H und je 2 F, 2 Cl oder 2 Br sein können.

13. Verwendung nach einem der Ansprüche 10 oder 12, wobei die indigoiden Moleküle an den Positionen 4,4' und/oder 5,5' und/oder 6,6' und/oder 7,7' ein oder mehrere Fluor-, Chlor- oder Brom- Substituenten aufweisen.

14. Wintersportgerät mit einer Gleitfläche, insbesondere Alpinski, Langlaufski, Sprungski, Snowboard, Skibob, Rodel, Schlitten, Skeleton oder Bob, **dadurch gekennzeichnet, dass** die Gleitfläche mit einem Gleitmittel aus mindestens einer Gleitmittelkomponente auf der Basis eines indigoiden Moleküls präpariert ist.

15. Gleitmittel zum Herabsetzen der Reibung einer Gleitfläche eines Wintersportgerätes gegenüber Schnee, Wasser und/oder Eis, **dadurch gekennzeichnet, dass** es aus Indigo und fluorfreiem Hydrocarbon-Wachs in gleicher Menge zusammengesetzt ist.

## Claims

1. Method for reducing the friction of the sliding surfaces of a winter sports apparatus with respect to snow, water and/or ice, **characterised in that** a lubricant, which contains at least one lubricant component based on an indigoid molecule, is applied in a solid, liquid or gaseous form to a surface coating of the sliding surface or is introduced into such a surface coating or is applied directly to a coating-free sliding surface of a winter sports apparatus.

2. Method according to claim 1, wherein the indigoid molecule comprises at least one halogenated derivative.

3. Method according to claim 1 or 2, **characterised in that** the indigoid molecule is indigo in the form of an E isomer having the following structural formula I: 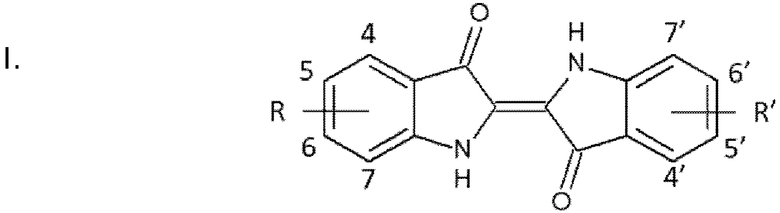 or a Z isomer having the following structural formula II: 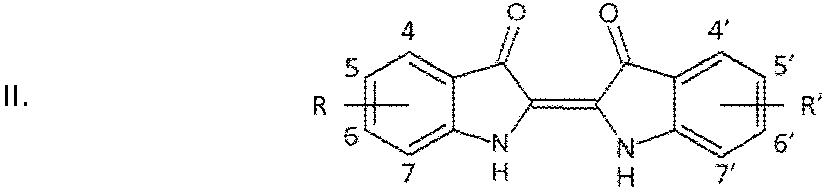 where R = 4, 5, 6, 7 and R' = 4', 5', 6', 7'; where R and R' independently of one another, can each be 4 H or monosubstituted with 3 H each and 1 F, 1 CI or 1 Br each, or disubstituted with 2 H each and 2 F, 2 CI or 2 Br each.

4. Method according to claim 1, **characterised in that** the indigoid molecule is isoindigo having the following structural formula III: 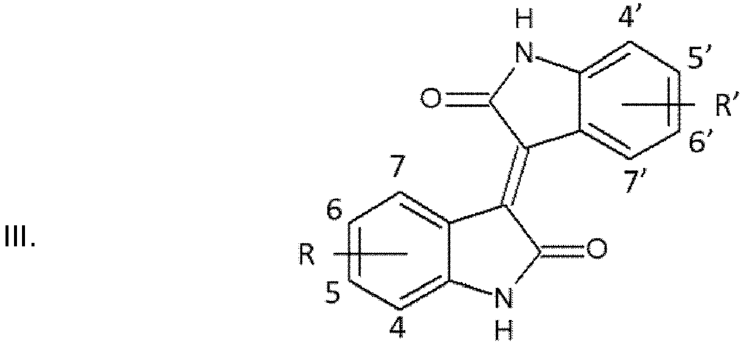 where R = 4, 5, 6, 7 and R' = 4', 5', 6', 7'; where R and R' independently of one another, can each be 4 H or monosubstituted with 3 H each and 1 F, 1 Cl or 1 Br each, or disubstituted with 2 H each and 2 F, 2 Cl or 2 Br each.

5. Method according to any one of claims 1 to 4, **characterised in that** the lubricant is introduced in the course of the manufacture of a ski or ski-like winter sports apparatus into the surface coating of the sliding surface of this winter sports apparatus as a component of the coating.

6. Method according to any one of claims 1 to 5, **characterised in that** the lubricant is applied as a solid, powder, paste, melt, solution, dispersion or emulsion to the surface of a coating of the sliding surface of the winter sports apparatus.

7. Method according to any one of claims 1 to 6, **characterised in that** the lubricant contains a mixture of at least two different lubricant components based on indigoid molecules.

8. Use of indigoid molecules as lubricant components of a lubricant for preparing the sliding surfaces of a winter sports apparatus, in particular of an alpine ski, a cross-country ski, jumping ski, snowboard, skibob, toboggan, sled, skeleton or bobsleigh, for reducing the friction of the sliding surfaces of the winter sports apparatus with respect to snow, water and/or ice.

9. Use according to claim 8, wherein at least one halogenated derivative is used as the indigoid molecule.

10. Use according to claim 8, wherein indigo as an E isomer having the following structural formula I: 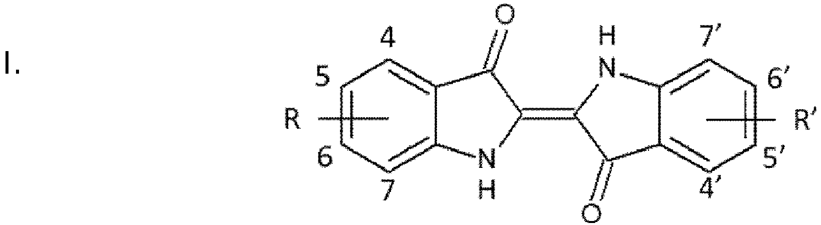 or as a Z isomer with the following structural formula II: 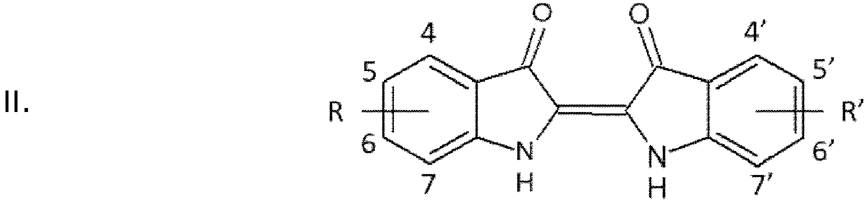 is used as the indigoid molecule, where R = 4, 5, 6, 7 and R' = 4', 5', 6',7'; where R and R' independently of one another, can each be 4 H or monosubstituted with 3 H each and 1 F, 1 Cl or 1 Br each, or disubstituted with 2 H each and 2 F, 2 Cl or 2 Br each.

11. Use according to claim 8, wherein 6,6'-dibromoindigo is used as the indigoid molecule.

12. Use according to claim 8, wherein isoindigo having the following structural formula III is used as the indigoid molecule: 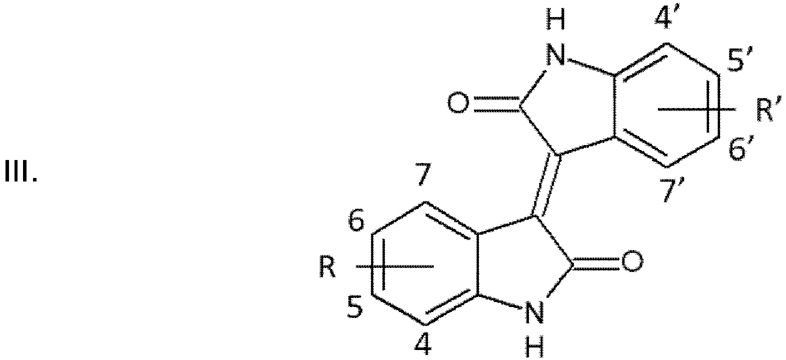 where R = 4, 5, 6, 7 and R' = 4', 5', 6', 7'; where R and R' independently of one another, can each be 4 H or monosubstituted with 3 H each and 1 F, 1 Cl or 1 Br each, or disubstituted with 2 H each and 2 F, 2 Cl or 2 Br each.

13. Use according to any one of claims 10 and 12, wherein the indigoid molecules have one or more fluorine, chlorine or bromine substituents at the positions 4,4' and/or 5,5' and/or 6,6' and/or 7,7'.

14. Winter sports apparatus having a sliding surface, in particular an alpine ski, cross-country ski, jumping ski, snowboard, skibob, toboggan, sled, skeleton or bob, **characterised in that** the sliding surface is prepared with a lubricant comprising at least one lubricant component based on an indigoid molecule.

15. Lubricant for reducing the friction of a sliding surface of a winter sports apparatus with respect to snow, water and/or ice, **characterised in that** it is composed of indigo and fluorine-free hydrocarbon wax in the same amount.

## Revendications

1. Procédé pour réduire le frottement des surfaces de glissement d'appareils de sports d'hiver contre la neige, l'eau et/ou la glace, dans lequel un lubrifiant, qui contient au moins un composant lubrifiant à base d'une molécule indigoïde, est appliqué sous forme solide, liquide ou gazeuse sur un revêtement de surface de la surface de glissement ou est introduit dans un tel revêtement de surface ou est appliqué directement sur une surface de glissement sans revêtement d'un appareil de sports d'hiver.

2. Procédé selon la revendication 1, **caractérisé par le fait que** la molécule indigoïde comprend au moins un dérivé halogéné.

3. Procédé selon la revendication 1 ou 2, dans lequel la molécule indigoïde est l'indigo sous forme d'un isomère E présentant la formule structurelle suivante I : 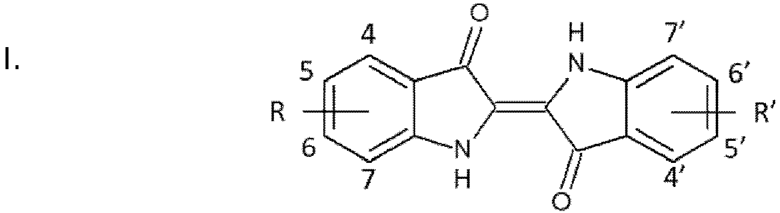 ou d'un isomère Z répondant à la formule structurelle II suivante 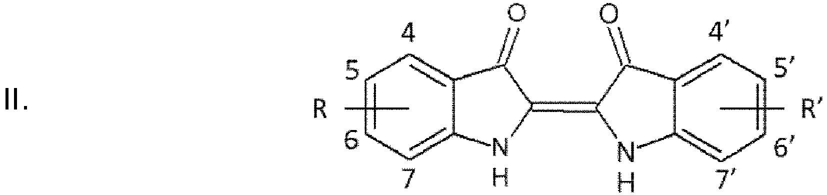 où R = 4,5,6,7 et R' = 4',5',6',7'; où R et R', indépendamment l'un de l'autre, peuvent être chacun 4 H ou monosubstitués par chacun 3 H et chacun 1 F, 1 Cl ou 1 Br, ou disubstitués par chacun 2 H et chacun 2 F, 2 Cl ou 2 Br.

4. Procédé selon la revendication 1, dans lequel la molécule indigoïde est l'isoindigo de formule structurelle III suivante : 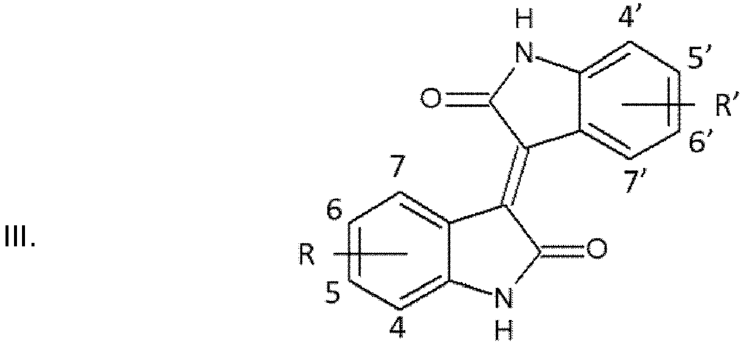 où R = 4,5,6,7 et R' = 4',5',6',7'; R et R' indépendamment l'un de l'autre, peuvent être chacun 4 H ou monosubstitués par chacun 3 H et chacun 1 F, 1 Cl ou 1 Br, ou disubstitués par chacun 2 H et chacun 2 F, 2 Cl ou 2 Br.

5. Procédé selon l'une des revendications 1 à 4, dans lequel l'agent de glissement est introduit dans le revêtement de surface de la surface de glissement de cet équipement de sport d'hiver au cours de la fabrication d'un ski ou d'un équipement de sport d'hiver de type ski, en tant que composant du revêtement.

6. Procédé selon l'une des revendications 1 à 5, dans lequel l'agent de glissement est appliqué sous forme de solide, de poudre, de pâte, de masse fondue, de solution, de dispersion ou d'émulsion sur la surface d'un revêtement de la surface de glissement de l'équipement de sport d'hiver.

7. Procédé selon l'une des revendications 1 à 6, dans lequel le lubrifiant contient un mélange d'au moins deux composants lubrifiants différents à base de molécules indigoïdes.

8. Utilisation de molécules indigoïdes en tant que composants lubrifiants d'un lubrifiant pour la préparation des surfaces de glissement d'un appareil de sport d'hiver, en particulier d'un ski alpin, d'un ski de fond, d'un ski de saut, d'un snowboard, d'un skibob, d'une luge, d'un traîneau, d'un skeleton ou d'un bobsleigh, pour réduire le frottement des surfaces de glissement de l'appareil de sport d'hiver contre la neige, l'eau et/ou la glace.

9. Utilisation selon la revendication 8, dans laquelle au moins un dérivé halogéné est utilisé comme molécule indigoïde.

10. Utilisation selon la revendication 8, dans laquelle l'indigo est utilisé sous forme d'isomère E de formule structurelle I : 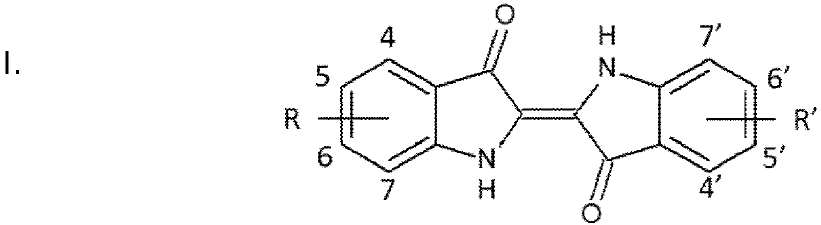 ou comme isomère Z répondant à la formule structurelle II suivante 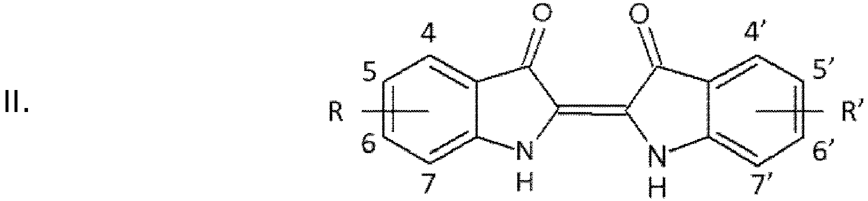 est utilisé comme molécule indigo, où R = 4,5,6,7 et R' = 4',5',6',7'; où R et R' indépendamment l'un de l'autre, peuvent être chacun 4 H ou monosubstitués avec chacun 3 H et chacun 1 F, 1 Cl ou 1 Br, ou disubstitués avec chacun 2 H et chacun 2 F, 2 Cl ou 2 Br.

11. Utilisation selon la revendication 8, dans laquelle le 6,6'-dibromoindigo est utilisé comme molécule indigoïde.

12. Utilisation selon la revendication 8, dans laquelle l'isoindigo de formule structurale III suivante est utilisé en tant que molécule indigoïde : 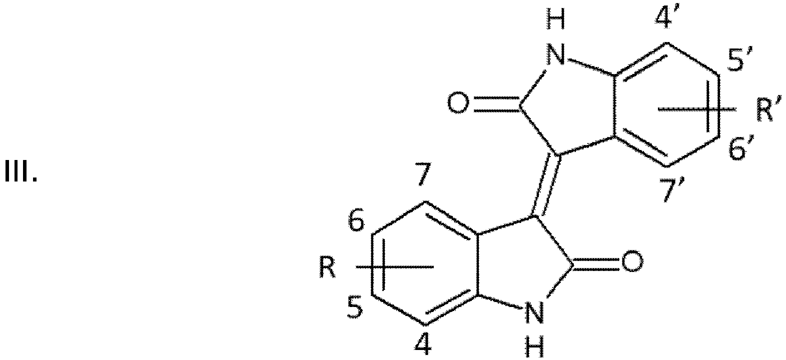 où R = 4,5,6,7 et R' = 4',5',6',7'; où R et R' indépendamment l'un de l'autre, peuvent être chacun 4 H ou monosubstitués par chacun 3 H et chacun 1 F, 1 Cl ou 1 Br, ou disubstitués par chacun 2 H et chacun 2 F, 2 Cl ou 2 Br.

13. Utilisation selon l'une des revendications 10 ou 12, dans laquelle les molécules indigoïdes présentent en positions 4,4' et/ou 5,5' et/ou 6,6' et/ou 7,7' un ou plusieurs substituants fluor, chlore ou brome.

14. Appareil de sport d'hiver avec une surface de glissement, en particulier des skis alpins, des skis de fond, des skis de saut, des snowboards, des skibobs, des luges, des traîneaux, des skeletons ou des bobsleighs, **caractérisé par le fait que** la surface de glissement est préparée avec un lubrifiant constitué d'au moins un composant lubrifiant à base d'une molécule indigoïde.

15. Agent de glissement pour réduire la friction d'une surface de glissement d'un équipement de sports d'hiver contre la neige, l'eau et/ou la glace, **caractérisé par le fait qu'**il est composé d'indigo et de cire hydrocarbonée sans fluor en quantité égale.
